(19) **Europäisches Patentamt / European Patent Office / Office européen des brevets**

(11) **EP 2 454 557 B1**

(12) **EUROPEAN PATENT SPECIFICATION**

(45) Date of publication and mention
of the grant of the patent:
**01.04.2015 Bulletin 2015/14**

(51) Int Cl.:
***G01C 21/34*** *(2006.01)*

(21) Application number: **09780496.7**

(86) International application number:
**PCT/EP2009/058902**

(22) Date of filing: **13.07.2009**

(87) International publication number:
**WO 2011/006527 (20.01.2011 Gazette 2011/03)**

(54) **IMPROVEMENTS RELATING TO NAVIGATION ROUTE PLANNING**

VERBESSERUNGEN IM ZUSAMMENHANG MIT NAVIGATIONSROUTENPLANUNG

AMÉLIORATIONS ASSOCIÉES À UNE PLANIFICATION D'ITINÉRAIRE DE NAVIGATION

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**23.05.2012 Bulletin 2012/21**

(73) Proprietor: **TomTom International B.V.
1011 AC  Amsterdam (NL)**

(72) Inventors:
• **BOSCHKER, Breght R.
NL-1011 DK Amsterdam (NL)**

• **TRUM, Jeroen
NL-5632 PT Eindhoven (NL)**
• **LUKASSEN, Robert
NL-5508 RM Veldhoven (NL)**

(74) Representative: **Dobson, Adrian
TomTom International BV
Oosterdoksstraat 114
NL-1011 Amsterdam (NL)**

(56) References cited:
**WO-A1-2009/051485     US-A1- 2003 158 658**

Description

Field of the Invention

The present invention relates to the field of navigation route planning devices, and methods associated therewith. Such devices may, for example, be installed as integral vehicle equipment, or may be portable devices usable in-vehicle or in other mobile environments. Alternatively, the device may implemented on a desktop computer, or in a client-server system. The invention may be implemented at least partly within a navigation device and/or at least partly with other equipment with which the navigation device communicates.

Background to the Invention

Portable navigation devices (PNDs) that include GPS (Global Positioning System) signal reception and processing functionality are well known and are widely employed as in-car or other vehicle navigation systems.

In general terms, a modern PNDs comprises a processor, memory (at least one of volatile and non-volatile, and commonly both), and map data stored within said memory. The processor and memory cooperate to provide an execution environment in which a software operating system may be established, and additionally it is commonplace for one or more additional software programs to be provided to enable the functionality of the PND to be controlled, and to provide various other functions.

Typically these devices further comprise one or more input interfaces that allow a user to interact with and control the device, and one or more output interfaces by means of which information may be relayed to the user. Illustrative examples of output interfaces include a visual display and a speaker for audible output. Illustrative examples of input interfaces include one or more physical buttons to control on/off operation or other features of the device (which buttons need not necessarily be on the device itself but could be on a steering wheel if the device is built into a vehicle), and a microphone for detecting user speech. In a particularly preferred arrangement the output interface display may be configured as a touch sensitive display (by means of a touch sensitive overlay or otherwise) to additionally provide an input interface by means of which a user can operate the device by touch.

Devices of this type will also often include one or more physical connector interfaces by means of which power and optionally data signals can be transmitted to and received from the device, and optionally one or more wireless transmitters/receivers to allow communication over cellular telecommunications and other signal and data networks, for example Wi-Fi, Wi-Max GSM and the like.

PND devices of this type also include a GPS antenna by means of which satellite-broadcast signals, including location data, can be received and subsequently processed to determine a current location of the device.

The PND device may also include electronic gyroscopes and accelerometers which produce signals that can be processed to determine the current angular and linear acceleration, and in turn, and in conjunction with location information derived from the GPS signal, velocity and relative displacement of the device and thus the vehicle in which it is mounted. Typically such features are most commonly provided in in-vehicle navigation systems, but may also be provided in PND devices if it is expedient to do so.

The utility of such PNDs is manifested primarily in their ability to determine a route between a first location (typically a start or current location) and a second location (typically a destination). These locations can be input by a user of the device, by any of a wide variety of different methods, for example by postcode, street name and house number, previously stored "well known" destinations (such as famous locations, municipal locations (such as sports grounds or swimming baths) or other points of interest), and favourite or recently visited destinations.

Typically, the PND is enabled by software for computing a "best" or "optimum" route between the start and destination address locations from the map data. A "best" or "optimum" route is determined on the basis of predetermined criteria and need not necessarily be the fastest or shortest route. The selection of the route along which to guide the driver can be very sophisticated, and the selected route may take into account existing, predicted and dynamically and/or wirelessly received traffic and road information, historical information about road speeds, and the driver's own preferences for the factors determining road choice (for example the driver may specify that the route should not include motorways or toll roads). The PND may record trip information so that the actual journey time may be recorded and fed back for more accurate prediction of how journey times vary at different times of day in accordance with habitual weight of traffic flow.

In addition, the device may continually monitor road and traffic conditions, and offer to or choose to change the route over which the remainder of the journey is to be made due to changed conditions. Real time traffic monitoring systems, based on various technologies (e.g. mobile phone data exchanges, fixed cameras, GPS fleet tracking) are being used to identify traffic delays and to feed the information into notification systems.

PNDs of this type may typically be mounted on the dashboard or windscreen of a vehicle, but may also be formed as part of an on-board computer of the vehicle radio or indeed as part of the control system of the vehicle itself. The navigation device may also be part of a hand-held system, such as a PDA (Portable Digital Assistant) a media player, a mobile phone or the like, and in these cases, the normal functionality of the hand-held system is extended by means of the installation of software on the device to perform both route calculation and navigation along a calculated route.

Route planning and navigation functionality may also be provided by a desktop or mobile computing resource running appropriate software. For example, the Royal Automobile Club (RAC) provides an on-line route planning and navigation facility at http://www.rac.co.uk, which facility allows a user to enter a start point and a destination whereupon the server to which the user's PC is connected calculates a route (aspects of which may be user specified), generates a map, and generates a set of exhaustive navigation instructions for guiding the user from the selected start point to the selected destination. The facility also provides for pseudo three-dimensional rendering of a calculated route, and route preview functionality which simulates a user travelling along the route and thereby provides the user with a preview of the calculated route.

In the context of a PND, once a route has been calculated, the user interacts with the navigation device to select the desired calculated route, optionally from a list of proposed routes. Optionally, the user may intervene in, or guide the route selection process, for example by specifying that certain routes, roads, locations or criteria are to be avoided or are mandatory for a particular journey. The route calculation aspect of the PND forms one primary function, and navigation along such a route is another primary function.

During navigation along a calculated route, it is usual for such PNDs to provide visual and/or audible instructions to guide the user along a chosen route to the end of that route, i.e. the desired destination. It is also usual for PNDs to display map information on-screen during the navigation, such information regularly being updated on-screen so that the map information displayed is representative of the current location of the device, and thus of the user or user's vehicle if the device is being used for invehicle navigation.

An icon displayed on-screen typically denotes the current device location, and is centred with the map information of current and surrounding roads in the vicinity of the current device location and other map features also being displayed. Additionally, navigation information may be displayed, optionally in a status bar above, below or to one side of the displayed map information, examples of navigation information include a distance to the next deviation from the current road required to be taken by the user, the nature of that deviation possibly being represented by a further icon suggestive of the particular type of deviation, for example a left or right turn. The navigation function also determines the content, duration and timing of audible instructions by means of which the user can be guided along the route. As can be appreciated a simple instruction such as "turn left in 100 m" requires significant processing and analysis. As previously mentioned, user interaction with the device may be by a touch screen, or additionally or alternately by steering column mounted remote control, by voice activation or by any other suitable method.

A further important function provided by the device is automatic route re-calculation in the event that: a user deviates from the previously calculated route during navigation (either by accident or intentionally); real-time traffic conditions dictate that an alternative route would be more expedient and the device is suitably enabled to recognize such conditions automatically, or if a user actively causes the device to perform route re-calculation for any reason.

It is also known to allow a route to be calculated with user defined criteria; for example, the user may prefer a scenic route to be calculated by the device, or may wish to avoid any roads on which traffic congestion is likely, expected or currently prevailing. The device software would then calculate various routes and weigh more favourably those that include along their route the highest number of points of interest (known as POIs) tagged as being for example of scenic beauty, or, using stored information indicative of prevailing traffic conditions on particular roads, order the calculated routes in terms of a level of likely congestion or delay on account thereof. Other POI-based and traffic information-based route calculation and navigation criteria are also possible.

Although the route calculation and navigation functions are fundamental to the overall utility of PNDs, it is possible to use the device purely for information display, or "free-driving", in which only map information relevant to the current device location is displayed, and in which no route has been calculated and no navigation is currently being performed by the device. Such a mode of operation is often applicable when the user already knows the route along which it is desired to travel and does not require navigation assistance.

Devices of the type described above, for example the 720T model manufactured and supplied by Tom-Tom International B.V., provide a reliable means for enabling users to navigate from one position to another.

A limitation of conventional navigation and/or routing planning devices is that the route-planning functionality is of course focused on aiding a user to voyage from a departure or start location to a destination location different from the departure location, using appropriate routing criteria (such as trying to minimize a primary "cost" parameter such as journey time or total distance, while also taking account of preferences such as a scenic driving or a scenic walking route, or passing nearby points of interest). A route planning device of this conventional type can be extremely useful for calculating an optimum route passing through an unfamiliar area. However, a tourist may often desire to calculate a sightseeing route, by vehicle or on foot, starting and finishing at the same location, such as a hotel where the tourist is staying. When the start and destination locations are the same, the distance between them is zero, and the usual route-planning algorithms fail. For tourist sightseeing, some advanced navigation devices permit installing of pre-calculated itineraries obtained from, for example, a website or other itinerary supplier. However, the quality of such itineraries depends on a third party supplier, and itineraries may not be available for all areas of interest. There is also no facility to fine-tune a preprepared itinerary according to an individual user's preferences, nor fit the itinerary to a particular journey time or distance.

US 2003/158658 describes a navigation system that automatically designs a sightseeing route, but in which all tourist attractions are considered equally attractive.

The present invention has been devised bearing the above issues in mind.

## Summary of the Invention

Aspects of the present invention are defined in the claims.

Broadly speaking, one aspect of the present invention provides a technique for calculating a route from a start location to a destination location, the route passing one or more attractors each representing a sightseeing attraction. The start and destination locations may be the same as each other or different. A digital database resource contains digital map information, the digital map information including a plurality of attractors. The technique comprises one or more of the following:

> (a) determining an initial route from the start location to the destination location, the initial route having a route cost, and setting the initial route as a current route;
> (b) determining for each attractor in a candidate set of the attractors, a relative attraction value that is dependent on a distance between the attractor and the current route;
> (c) determining which attractor corresponds to a largest attraction value; (d) modifying the current route to include a deviation to the attractor determined at step (c).

Steps (b) to (d) may be repeated one or more times, in order to calculate the route iteratively.

An advantage of the above technique is that the start and destination locations may be different or they may be the same. If the same, the initial route may be a dummy route, for example, of zero path length from the start location to the destination location, or an initial pilot circuit in the vicinity of the common start/finish location. The dummy route is updated with more intentional route information as soon as the route is modified to extend to one or more of the attractors.

The invention therefore permits automated calculation of a sightseeing route, even starting and finishing at the same location.

The technique also incorporates a route cost limit, for example, one or more values settable by a user. A route cost refers to any parameter used to judge route performance and, for example, a parameter that one would normally expect to minimise in other route calculation techniques. Example route cost parameters may include, but are not limited to, any of: route distance; expected journey time; financial cost of the route (for example in terms of fuel expended and/or tolls). By using a cost limit, instead of trying to minimise the cost, the technique can develop a sightseeing route less limited by conventional route calculation techniques.

The technique may also use an attraction value for each attractor, the attraction value indicating a relative weighting, or "score", indicating enjoyability of the attractor or desirability of visiting that attractor. The relative attraction may incorporate the attraction value by using a function that increases with an increase in attraction value of a respective attractor.

Another aspect of the invention provides a technique for calculating a route from a start location to a destination location, the route passing one or more attractors each representing a sightseeing attraction. A digital database resource contains digital map information, the digital map information including a plurality of attractors. The technique comprises one of more of the following:

> (a) receiving input information from a user defining a cost limit for the route, (for example, the cost limit optionally including at least one selected from: a route distance limit; a journey time limit; a financial cost);
> (b) determining a candidate attractor to include in the calculated route;
> (c) calculating an additional cost of modifying the calculated route to include the candidate attractor;
> (d) selectively modifying the calculated route to include the candidate attractor only if the additional cost does not cause the route cost to exceed the cost limit.

Herein is also described a technique for calculating a route passing one or more attractors each representing a sightseeing attraction. A digital database resource contains digital map information, the digital map information including a plurality of attractors. The technique comprises one or more of the following:

> (a) receiving input information from a user defining a start location for the route and at least one selection criterion for the route;
> (b) performing route calculation of said route based on said at least one selection criterion, such that said route extends from said start location passing one or more of said attractors, and returns to said start location.

Although the invention extends to cover the above aspects independently, additional advantages may be obtained by combining any two or more of the above aspects. All combinations and sub-combinations of the above aspects are explicitly contemplated.

The invention extends to cover all aspects of implementation, including but not limited to, methods, apparatus, computer programs, and record carriers carrying a computer program or map format.

## Brief Description of the Drawings

Various aspects of the teachings of the present invention, and arrangements embodying those teachings, will hereafter be described by way of illustrative example with reference to the accompanying drawings, in which:

Fig. 1 is a schematic illustration of a Global Positioning System (GPS);
Fig. 2 is a schematic illustration of electronic components arranged to provide a navigation device;
Fig. 3 is a schematic illustration of the manner in which a navigation device may receive information over a wireless communication channel;
Figs. 4A and 4B are illustrative perspective views of a navigation device;
Fig. 5 is a schematic representation of software/hardware hierarchy in the navigation device.
Fig. 6 is a schematic representation of information flow for calculating a sightseeing route;
Fig. 7 is a schematic representation of a digital map containing points of interest that are attractions for sightseeing;
Figs. 8a, 8b and 8c are contiguous parts of a schematic flow diagram showing the processing steps for calculating a sightseeing route;
Fig. 9a is schematic diagram showing representation of a path by vertices;
Fig. 9b is a schematic diagram showing substitution of the path of Fig. 9a by new paths visiting an attractor;
Fig. 10 is a schematic view of an input screen for enabling a user to input a route cost limit; and
Figs. 11 a-c are consecutive parts of a chart showing to the left, development of a route and, to the right, attraction value vectors viewed from a most recently added attractor vertex.

## Detailed Description of Preferred Embodiments

Preferred embodiments of the present invention will now be described with particular reference to a PND. It should be remembered, however, that the teachings of the present invention are not limited to PNDs but are instead universally applicable to any type of processing device that is configured to execute navigation software so as to provide route planning and/or navigation functionality. It follows therefore that in the context of the present application, a navigation device is intended to include (without limitation) any type of route planning and navigation device, irrespective of whether that device is embodied as a PND, a navigation device built into a vehicle, or indeed a computing resource (such as a desktop or portable personal computer (PC), mobile telephone, client-server system, or portable digital assistant (PDA)) executing route planning and/or navigation software.

The preferred embodiment implements a technique for calculating a route from a start location to a destination location, the route passing one or more attractors each representing a sightseeing attraction. The start and destination locations may be different from each other, but a significant feature of the embodiment is that the route calculation technique may be applied even when the start and destination locations are the same as each other. The calculation uses a "cost limit" within which the route is calculated. The cost limit may, for example, be a distance limit and/or a journey time limit. Unlike conventional route planning approaches, the technique does not seek to minimize this cost. Instead, the technique seeks to calculate a sightseeing route passing one or more sightseeing attractions (or "attractors") within the set cost limit. The calculation may also use a technique of setting an initial route as a current route, evaluating a relative attraction value for one or more attractors depending on a distance between the current route and the attractor, determining which attractor results in the greatest relative attraction value, and modifying the route to include the attractor (optionally if the additional cost of modifying the route does not exceed the cost limit). The techniques may be used iteratively to develop the route.

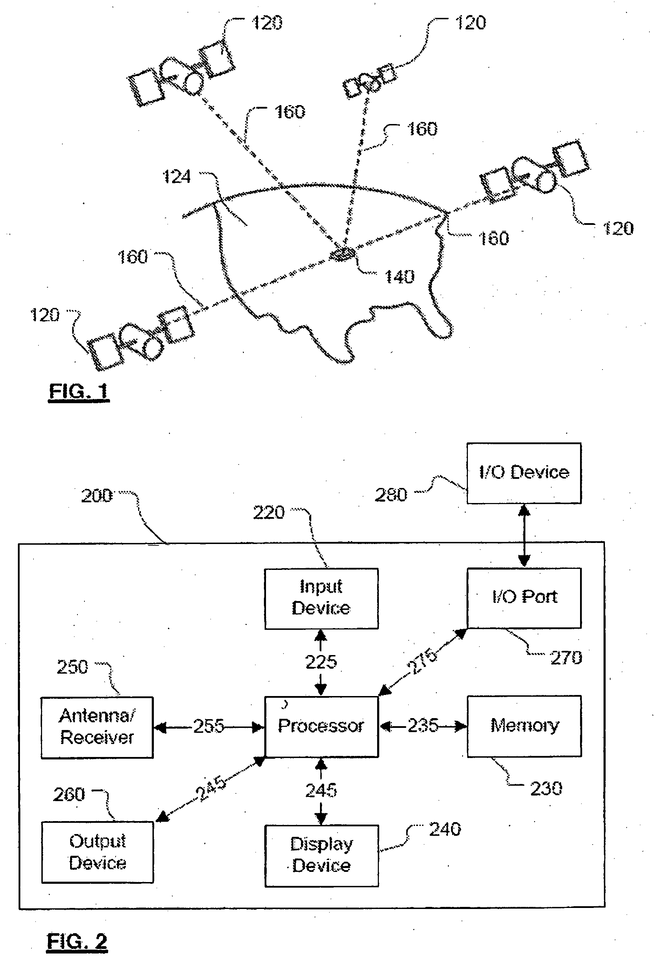

Fig. 1 illustrates an example view of a positioning system usable by navigation devices. The example positioning system is the Global Positioning System (GPS), which is known and used for a variety of purposes. However, many other types of positioning system (e.g. satellite and/or radio based) may be used as desired. In general, GPS is a satellite-radio based navigation system capable of determining continuous position, velocity, time, and in some instances direction information for an unlimited number of users. Formerly known as NAVSTAR, the GPS incorporates a plurality of satellites which orbit the earth in extremely precise orbits. Based on these precise orbits, GPS satellites can relay their location to any number of receiving units.

The GPS system is implemented when a device, specially equipped to receive GPS data, begins scanning radio frequencies for GPS satellite signals. Upon receiving a radio signal from a GPS satellite, the device determines the precise location of that satellite via one of a plurality of different conventional methods. The device will continue scanning, in most instances, for signals until it has acquired at least three different satellite signals (noting that position is not normally, but can be determined, with only two signals using other triangulation techniques). Implementing geometric triangulation, the receiver utilizes the three known positions to determine its own two-dimensional position relative to the satellites. This can be done in a known manner. Additionally, acquiring a fourth satellite signal will allow the receiving device to calculate its three dimensional position by the same geometrical calculation in a known manner. The position and velocity data can be updated in real time on a continuous basis by an unlimited number of users.

As shown in Figure 1, the GPS system is denoted generally by reference numeral 100. A plurality of satellites 120 are in orbit about the earth 124. The orbit of each satellite 120 is not necessarily synchronous with the orbits of other satellites 120 and, in fact, is likely asynchronous. A GPS receiver 140 is shown receiving spread spectrum GPS satellite signals 160 from the various satellites 120.

The spread spectrum signals 160, continuously transmitted from each satellite 120, utilize a highly accurate frequency standard accomplished with an extremely accurate atomic clock. Each satellite 120, as part of its data signal transmission 160, transmits a data stream indicative of that particular satellite 120. It is appreciated by those skilled in the relevant art that the GPS receiver device 140 generally acquires spread spectrum GPS satellite signals 160 from at least three satellites 120 for the GPS receiver device 140 to calculate its two-dimensional position by triangulation. Acquisition of an additional signal, resulting in signals 160 from a total of four satellites 120, permits the GPS receiver device 140 to calculate its three-dimensional position in a known manner.

Figure 2 is an illustrative representation of electronic components of a navigation device 200 according to a preferred embodiment of the present invention, in block component format. It should be noted that the block diagram of the navigation device 200 is not inclusive of all components of the navigation device, but is only representative of many example components.

The navigation device 200 is located within a housing (not shown). The housing includes a processor 210 connected to an input device 220 and a display screen 240. The input device 220 can include a keyboard device, voice input device, touch panel and/or any other known input device utilised to input information; and the display screen 240 can include any type of display screen such as an LCD display, for example. In a particularly preferred arrangement the input device 220 and display screen 240 are integrated into an integrated input and display device, including a touchpad or touchscreen input so that a user need only touch a portion of the display screen 240 to select one of a plurality of display choices or to activate one of a plurality of virtual buttons.

The navigation device may include an output device 260, for example an audible output device (e.g. a loudspeaker). As output device 260 can produce audible information for a user of the navigation device 200, it is should equally be understood that input device 240 can include a microphone and software for receiving input voice commands as well.

In the navigation device 200, processor 210 is operatively connected to and set to receive input information from input device 220 via a connection 225, and operatively connected to at least one of display screen 240 and output device 260, via output connections 245, to output information thereto. Further, the processor 210 is operably coupled to a memory resource 230 via connection 235 and is further adapted to receive/send information from/to input/output (I/O) ports 270 via connection 275, wherein the I/O port 270 is connectible to an I/O device 280 external to the navigation device 200. The memory resource 230 comprises, for example, a volatile memory, such as a Random Access Memory (RAM) and a non-volatile memory, for example a digital memory, such as a flash memory. The external I/O device 280 may include, but is not limited to an external listening device such as an earpiece for example. The connection to I/O device 280 can further be a wired or wireless connection to any other external device such as a car stereo unit for hands-free operation and/or for voice activated operation for example, for connection to an ear piece or head phones, and/or for connection to a mobile phone for example, wherein the mobile phone connection may be used to establish a data connection between the navigation device 200 and the internet or any other network for example, and/or to establish a connection to a server via the internet or some other network for example.

Fig. 2 further illustrates an operative connection between the processor 210 and an antenna/receiver 250 via connection 255, wherein the antenna/receiver 250 can be a GPS antenna/receiver for example. It will be understood that the antenna and receiver designated by reference numeral 250 are combined schematically for illustration, but that the antenna and receiver may be separately located components, and that the antenna may be a GPS patch antenna or helical antenna for example.

Further, it will be understood by one of ordinary skill in the art that the electronic components shown in Fig. 2 are powered by power sources (not shown) in a conventional manner. As will be understood by one of ordinary skill in the art, different configurations of the components shown in Fig. 2 are considered to be within the scope of the present application. For example, the components shown in Fig. 2 may be in communication with one another via wired and/or wireless connections and the like. Thus, the scope of the navigation device 200 of the present application includes a portable or handheld navigation device 200.

In addition, the portable or handheld navigation device 200 of Fig. 2 can be connected or "docked" in a known manner to a vehicle such as a bicycle, a motorbike, a car or a boat for example. Such a navigation device 200 is then removable from the docked location for portable or handheld navigation use.

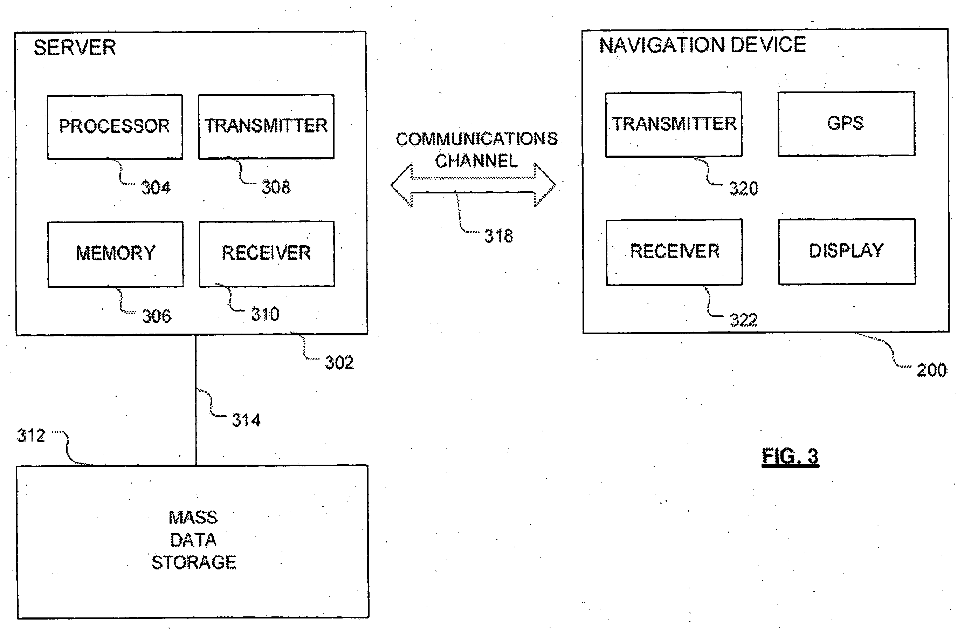

Referring now to Fig. 3, the navigation device 200 may establish a "mobile" or telecommunications network connection with a server 302 via a mobile device (not shown) (such as a mobile phone, PDA, and/or any device with mobile phone technology) establishing a digital connection (such as a digital connection via known Bluetooth technology for example). Thereafter, through its network service provider, the mobile device can establish a network connection (through the internet for example) with a server 302. As such, a "mobile" network connection is established between the navigation device 200 (which can be, and often times is mobile as it travels alone and/or in a vehicle) and the server 302 to provide a "real-time" or at least very "up to date" gateway for information.

The establishing of the network connection between the mobile device (via a service provider) and another device such as the server 302, using an internet (such as the World Wide Web) for example, can be done in a known manner. This can include use of TCP/IP layered protocol for example. The mobile device can utilize any number of communication standards such as CDMA, GSM, WAN, etc.

As such, an internet connection may be utilised which is achieved via data connection, via a mobile phone or mobile phone technology within the navigation device 200 for example. For this connection, an internet connection between the server 302 and the navigation device 200 is established. This can be done, for example, through a mobile phone or other mobile device and a GPRS (General Packet Radio Service)-connection (GPRS connection is a high-speed data connection for mobile devices provided by telecom operators; GPRS is a method to connect to the internet).

The navigation device 200 can further complete a data connection with the mobile device, and eventually with the internet and server 302, via existing Bluetooth technology for example, in a known manner, wherein the data protocol can utilize any number of standards, such as the GSRM, the Data Protocol Standard for the GSM standard, for example.

The navigation device 200 may include its own mobile phone technology within the navigation device 200 itself (including an antenna for example, or optionally using the internal antenna of the navigation device 200). The mobile phone technology within the navigation device 200 can include internal components as specified above, and/or can include an insertable card (e.g. Subscriber Identity Module or SIM card), complete with necessary mobile phone technology and/or an antenna for example. As such, mobile phone technology within the navigation device 200 can similarly establish a network connection between the navigation device 200 and the server 302, via the internet for example, in a manner similar to that of any mobile device.

For GRPS phone settings, a Bluetooth enabled navigation device may be used to correctly work with the ever changing spectrum of mobile phone models, manufacturers, etc., model/manufacturer specific settings may be stored on the navigation device 200 for example. The data stored for this information can be updated.

In Fig. 3 the navigation device 200 is depicted as being in communication with the server 302 via a generic communications channel 318 that can be implemented by any of a number of different arrangements. The server 302 and a navigation device 200 can communicate when a connection via communications channel 318 is established between the server 302 and the navigation device 200 (noting that such a connection can be a data connection via mobile device, a direct connection via personal computer via the internet, etc.).

The server 302 includes, in addition to other components which may not be illustrated, a processor 304 operatively connected to a memory 306 and further operatively connected, via a wired or wireless connection 314, to a mass data storage device 312. The processor 304 is further operatively connected to transmitter 308 and receiver 310, to transmit and send information to and from navigation device 200 via communications channel 318. The signals sent and received may include data, communication, and/or other propagated signals. The transmitter 308 and receiver 310 may be selected or designed according to the communications requirement and communication technology used in the communication design for the navigation system 200. Further, it should be noted that the functions of transmitter 308 and receiver 310 may be combined into a signal transceiver.

Server 302 is further connected to (or includes) a mass storage device 312, noting that the mass storage device 312 may be coupled to the server 302 via communication link 314. The mass storage device 312 contains a store of navigation data and map information, and can again be a separate device from the server 302 or can be incorporated into the server 302.

The navigation device 200 is adapted to communicate with the server 302 through communications channel 318, and includes processor, memory, etc. as previously described with regard to Fig. 2, as well as transmitter 320 and receiver 322 to send and receive signals and/or data through the communications channel 318, noting that these devices can further be used to communicate with devices other than server 302. Further, the transmitter 320 and receiver 322 are selected or designed according to communication requirements and communication technology used in the communication design for the navigation device 200 and the functions of the transmitter 320 and receiver 322 may be combined into a single transceiver.

Software stored in server memory 306 provides instructions for the processor 304 and allows the server 302 to provide services to the navigation device 200. One service provided by the server 302 involves processing requests from the navigation device 200 and transmitting navigation data from the mass data storage 312 to the navigation device 200. Another service provided by the server 302 includes processing the navigation data using various algorithms for a desired application and sending the results of these calculations to the navigation device 200.

The communication channel 318 generically represents the propagating medium or path that connects the navigation device 200 and the server 302. Both the server 302 and navigation device 200 include a transmitter for transmitting data through the communication channel and a receiver for receiving data that has been transmitted through the communication channel.

The communication channel 318 is not limited to a particular communication technology. Additionally, the communication channel 318 is not limited to a single communication technology; that is, the channel 318 may include several communication links that use a variety of technology. For example, the communication channel 318 can be adapted to provide a path for electrical, optical, and/or electromagnetic communications, etc. As such, the communication channel 318 includes, but is not limited to, one or a combination of the following: electric circuits, electrical conductors such as wires and coaxial cables, fibre optic cables, converters, radio-frequency (RF) waves, the atmosphere, empty space, etc. Furthermore, the communication channel 318 can include intermediate devices such as routers, repeaters, buffers, transmitters, and receivers, for example.

In one illustrative arrangement, the communication channel 318 includes telephone and computer networks. Furthermore, the communication channel 318 may be capable of accommodating wireless communication such as radio frequency, microwave frequency, infrared communication, etc. Additionally, the communication channel 318 can accommodate satellite communication.

The communication signals transmitted through the communication channel 318 include, but are not limited to, signals as may be required or desired for given communication technology. For example, the signals may be adapted to be used in cellular communication technology such as Time Division Multiple Access (TDMA), Frequency Division Multiple Access (FDMA), Code Division Multiple Access (CDMA), Global System for Mobile Communications (GSM), etc. Both digital and analogue signals can be transmitted through the communication channel 318. These signals may be modulated, encrypted and/or compressed signals as may be desirable for the communication technology.

The server 302 includes a remote server accessible by the navigation device 200 via a wireless channel. The server 302 may include a network server located on a local area network (LAN), wide area network (WAN), virtual private network (VPN), etc.

The server 302 may include a personal computer such as a desktop or laptop computer, and the communication channel 318 may be a cable connected between the personal computer and the navigation device 200. Alternatively, a personal computer may be connected between the navigation device 200 and the server 302 to establish an internet connection between the server 302 and the navigation device 200. Alternatively, a mobile telephone or other handheld device may establish a wireless connection to the internet, for connecting the navigation device 200 to the server 302 via the internet.

The navigation device 200 may be provided with information from the server 302 via information downloads which may be periodically updated automatically or upon a user connecting navigation device 200 to the server 302 and/or may be more dynamic upon a more constant or frequent connection being made between the server 302 and navigation device 200 via a wireless mobile connection device and TCP/IP connection for example. For many dynamic calculations, the processor 304 in the server 302 may be used to handle the bulk of the processing needs, however, processor 210 of navigation device 200 can also handle much processing and calculation, oftentimes independent of a connection to a server 302.

As indicated above in Fig. 2, a navigation device 200 includes a processor 210, an input device 220, and a display screen 240. The input device 220 and display screen 240 are integrated into an integrated input and display device to enable both input of information (via direct input, menu selection, etc.) and display of information through a touch panel screen, for example. Such a screen may be a touch input LCD screen, for example, as is well known to those of ordinary skill in the art. Further, the navigation device 200 can also include any additional input device 220 and/or any additional output device 241, such as audio input/output devices for example.

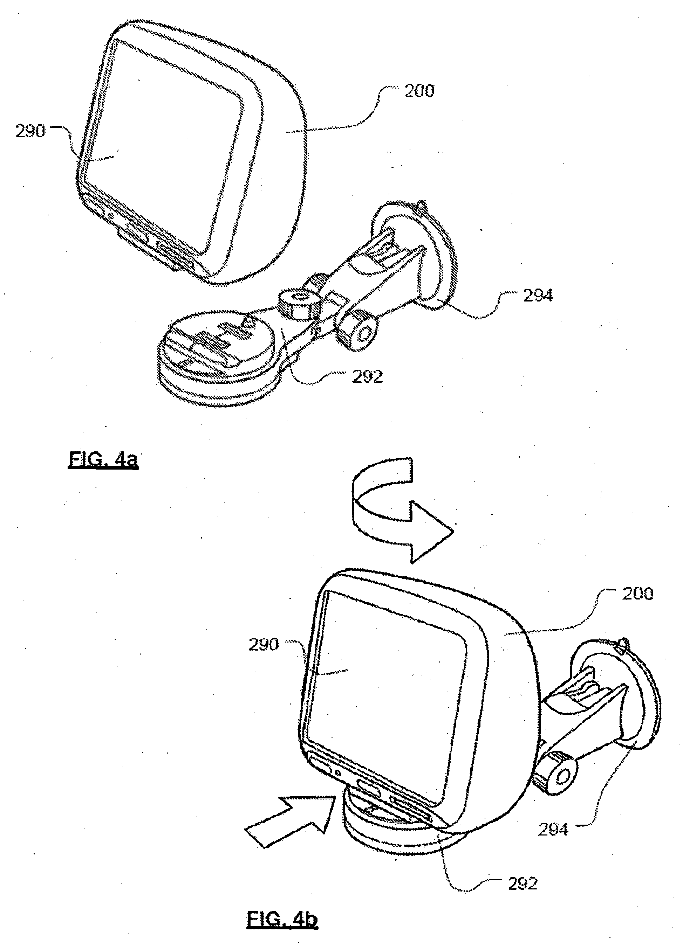

Figs 4A and 4B are perspective views of a navigation device 200. As shown in Fig. 4A, the navigation device 200 may be a unit that includes an integrated input and display device 290 (a touch panel screen for example) and the other components of fig. 2 (including but not limited to internal GPS receiver 250, microprocessor 210, a power supply, memory systems 230, etc.).

The navigation device 200 may sit on an arm 292, which itself may be secured to a vehicle dashboard/window/etc. using a suction cup 294. This arm 292 is one example of a docking station to which the navigation device 200 can be docked.

As shown in Fig. 4B, the navigation device 200 can be docked or otherwise connected to an arm 292 of the docking station by snap connecting the navigation device 292 to the arm 292 for example. The navigation device 200 may then be rotatable on the arm 292, as shown by the arrow of Fig. 4B. To release the connection between the navigation device 200 and the docking station, a button on the navigation device 200 may be pressed, for example. Other equally suitable arrangements for coupling and decoupling the navigation device to a docking station are well known to persons of ordinary skill in the art. Alternatively, the navigation device 200 may be used in a portable mode out of a vehicle, for example, for calculating and navigating walking routes for a user on foot or travelling by other means, such as cycling.

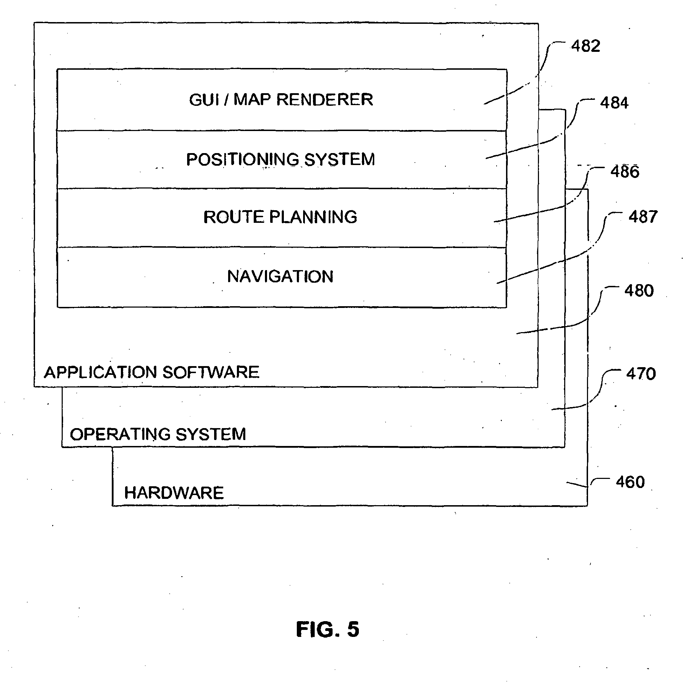

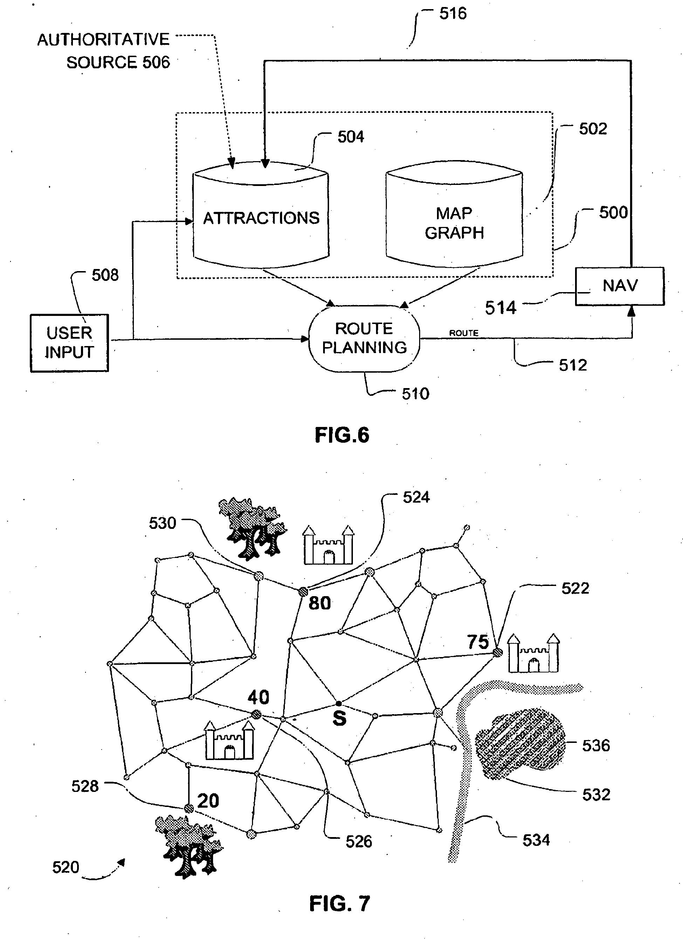

Referring now to Figs. 5 and 6 of the accompanying drawings, the memory resource 230 stores a boot loader program (not shown) that is executed by the processor 210 in order to load an operating system 470 from the memory resource 230 for execution by functional hardware components 460, and which provides an environment in which application software 480 can run. The operating system 470 serves to control the functional hardware components 460 and resides between the application software 480 and the functional hardware components 460. The operating system 470 may provide universal services for the application software, for example, including maintaining current time and date information. The application software 480 provides an operational environment implementing core functions of the navigation device 200, for example map viewing, route planning, navigation functions and any other functions associated therewith.

The memory resource 230 also stores a digital map database 500 used by the application software 480 to generate map views, and to calculate navigation routes. The digital map database 500 includes information defining roads, built-up areas, terrain type, elevation, points of interest and/or attractors. The digital map database 500 may include several different information components, stored together or in separate database modules. As illustrated in Fig. 6, the digital map database 500 is illustrated as having a map graph component 502 and an attractions component 504. Referring to Fig. 7, the map graph component 502 is represented as a set V of vertices v, and a set E of directional edges connecting respective vertices. The edges represent, for example, roads or footpaths, and the vertices represent, for example, changes of direction and, where connected to more than two edges, junctions. A calculated route is represented as a sequence of one or more of the edges extending from a start location (start vertex) through one or more intermediate vertices to a destination location (destination vertex).

The attraction component 504 represents sightseeing attractions (or "attractors") that may be of interest for tourists. The set of information representing attractions (also referred to herein as the set of attractors) may include at least some so-called points-of-interest (POI) already stored in the digital map database 500. However, points of interest might also include features such as post-offices, car-parking areas, and other useful information not forming attractions for a sightseeing tour. Therefore, the set of attractors in attractions component 504, and the set of points of interest, may form at least partly overlapping information sets but each may represented independently of the other in view of the possible differences. The information in the attractions database component 504 may optionally be obtained from, or supplemented by, a third-party authoritative source 506, such as a publisher of electronic travel guide information. In Fig. 7 attractors are 522-536 illustrated, including castles 522-526, forests 528 and 530, a river and river bank 534 and wetlands habitat 536.

Each attractor represented in the attractions database component 504 optionally includes an attraction category and/or an attraction value. The attraction category may distinguish between, for example: monuments (e.g. castles and chateaux); memorials; museums; forests; picnic areas; play areas; river banks; picturesque views; etc. This is merely a non-exhaustive list to illustrate the principles used in the present embodiment. A far greater, or even smaller, number of categories may be implemented as desired. One or more categories may also be sub-categorised hierarchically to offer more refined classification of attractions. A single attractor may belong in plural categories as appropriate. Plural attractors may also be grouped or associated together to be visited as a group (even if at different or slightly different locations). If implemented, the use of attraction categories may enable the user to decide which type of attractors he or she would like to visit, and to exclude attraction categories not of interest to that individual user. However, some embodiments may omit the provision of categories if not desired.

The attraction value may indicate an approval score by which the attractor is generally rated as a sightseeing attraction. The attraction value may, for example, be based on feedback from visitors, feedback from other users of the navigation/route planning system, or the user's own general feedback of visited places stored in the attractions component 504. In Fig. 7, castle 522 has a relatively higher attraction value of 75, castle 524 has an even higher attraction value of 80, whereas castle 526 has a more modest attraction value of 40. Forest 528 has an attraction value of 20, whereas forest 530 is unrated. Unrated attractors may be deemed to have any predetermined default or initial attraction value, for example, unity (1), or 10. If implemented, the use of an attraction value can enable the more enjoyable attractors to be weighted more favourably for visiting. It will of course be appreciated that in some embodiments, the attraction value may be omitted or may be made equal for all attractors.

Referring to Fig. 6, route planning stage 510 uses information from the digital map database 500 and user preference input 508 in order to calculate a route 512 visiting sightseeing attractions (attractors) according to the user's preferences. In the present embodiment, the device 200 includes navigation stage 514 for guiding the user along the route in real time (for example, by driving, cycling, or walking). The trip is logged, and information identifying which attractors have now been visited may be fed back to the attractions database component 504, as shown at 516. As explained later below, such information may be useful in enabling a user to calculate a second route for another time or day, omitting the attractors that have already been visited.

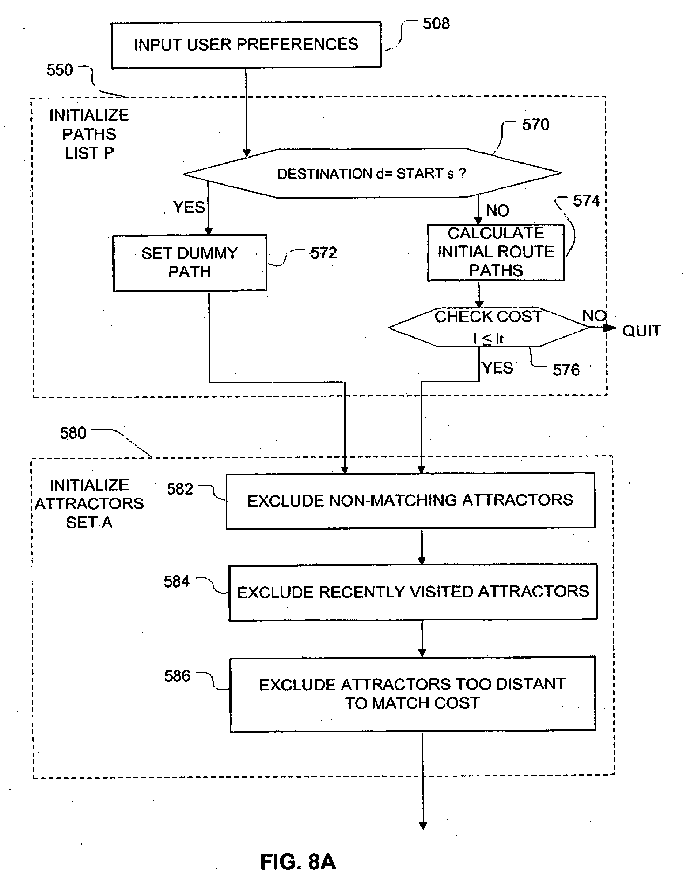

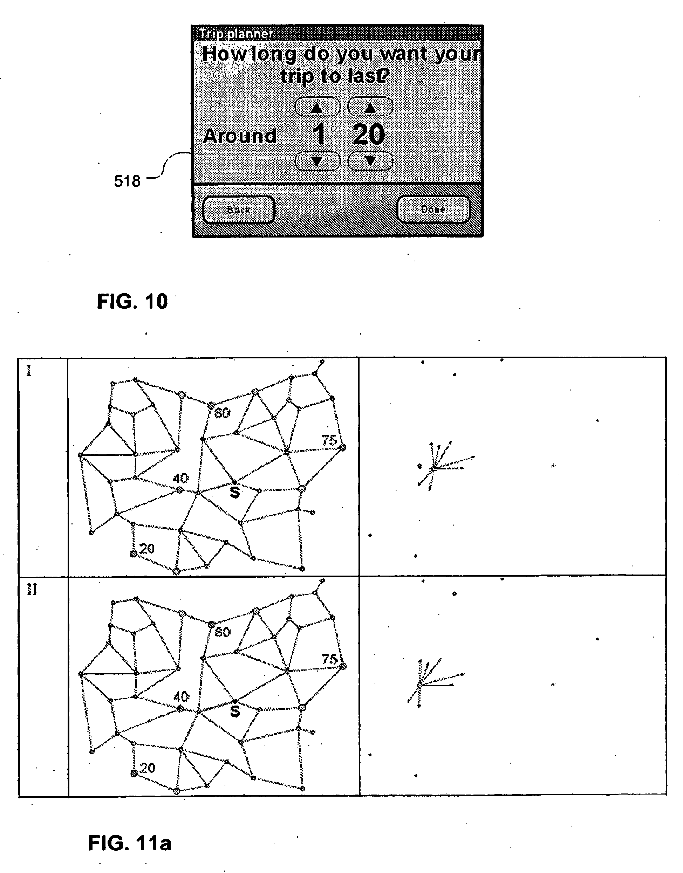

Referring to Fig. 8a, the principles of the present embodiment to calculate a sightseeing route are now explained. At step 508, the user is prompted to enter, or select from, route criteria defining the user's preferences for the sightseeing route. Referring to Fig. 10, one input parameter may be a "cost" limit "$l_t$" of the route. As used herein, the term "cost" is used to denote any parameter that, in other route calculation systems, one might attempt to minimize as an undesirable quantity. Examples of cost include the journey time and/or the journey distance. A financial cost (for example, road tolls and cost of fuel consumed) may be used additionally or alternatively, but the term "cost" is not limited to a financial cost. In Fig. 10 the user has the choice of selecting a journey time, but a distance limit and/or financial cost may be entered instead or additionally, as desired according to implementation. If plural input parameters are offered, the user may leave some parameters blank if the user decides not to impose a limit on the respective parameter. It may be compulsory for the user to input at least one valid cost limitation, or one or more pre-set or default cost limit values may be assumed by the navigation device 200 if the user does not input his own limit value(s). For example, default cost limit values may include a default distance limit (e.g. 50km), and/or a default time duration limit (e.g. 2hrs).

Still at step 508, another input parameter (not shown) that the user may enter is to select the category or categories of attractors desired to be visited and/or one or more categories desired to be excluded from the visit. The user may also be prompted to select whether to impose a limit on the attraction values of attractors desired to be visited. For example, the user could choose to exclude attractors having an attraction value of less than a certain threshold, for example, exclude attractors of value less than 10. The user may also be prompted whether to exclude attractors that have been visited recently. As mentioned above, when an attractor is visited, a date-stamp and/or timestamp can be recorded in the attraction database component 504. The user then has the option to exclude a repeat visit to such attractors, to enable other attractors to be visited on subsequent sight-seeing trips.

Still at step 508, another input parameter may be a start location "s" and a destination location "d" for the route. These locations may be different, but a significant feature of the present embodiment is that the route planning module permits the start location "s" and destination location "d" to be the same if desired. The.user may, for example, start and finish the sightseeing route at a common location, representing the hotel where he or she is staying.

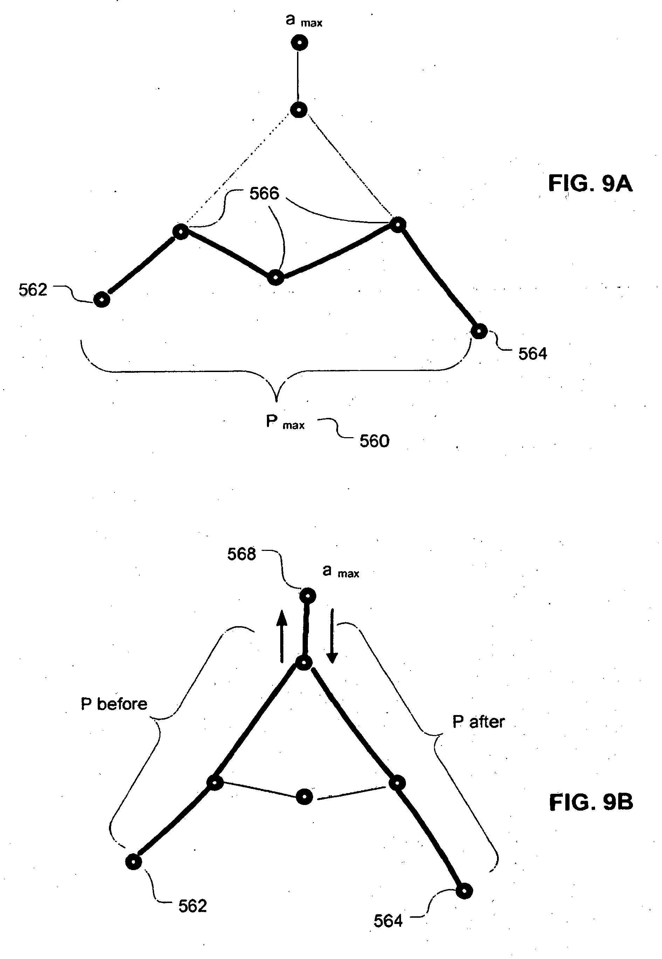

After step 508, the process proceeds to step 550 of initialising a paths list P that will represent the calculated route. The route is represented as a sequence or list of contiguous segments, each referred to herein as a path "p". Referring to Fig. 9a, each path is represented by at least an initial vertex 562, at least an end vertex 564, joined by one or more edges and intermediate vertices 566. All index values of the vertices and edges may be stored as part of the path, or some values may be assumed. For example, the initial vertex 562 may be assumed to be the same as the end vertex of the preceding path (not shown) as the paths are collectively continuous. The path list requires initialization because the technique of the present invention is to develop the route iteratively. Such an iterative approach requires an initial route or pilot route (even a dummy route) to be defined on which the iterations can build to extend or expand the route to visit attractors according to the user's preferences and within the route cost limits set by the user. It is also desirable to be able to use the same route planning algorithm to develop a sight-seeing route that can accommodate the start and destinations locations being the same or different.

Step 550 includes an initial step of comparing the start location "s" and destination location "d" to determine whether they are the same. If the two locations are not the same, the process proceeds to step 574 at which a conventional route-planning function (e.g. called *planpath*) is implemented to calculate an initial path from the start location "s" to the destination location "d", without reference to visiting attractors. Typically, the route-planning function aims to find an optimum route path minimizing cost, such as distance or travel time. Such conventional functions are well known to the person skilled in the art in the field of navigation and route planning devices, and need not be described here in detail. The route planning function is, in general, capable of planning a minimal cost path $\{e_i\}$ between two vertices contained in the set V, the path consisting of one or more edges from E and optionally one or more intermediate vertices from V. The route planning function may also include calculating a cost "l" of the route in terms of the cost parameter (e.g. time or distance), or an additional cost calculating function may be invoked each time that a new path is calculated. Either is advantageous in enabling the cost of a path (or route segment) to be calculated and stored as a parameter of, or associated with, the respective path. The path list then contains not just information defining the vertices and edges of the path, but also the path cost as an associated parameter. This enables the individual contribution of the path to the overall route cost to be analysed, and also enables the cost to be quickly recalculated if the path is removed from the route.

The route calculated is used as the initial (pilot) path stored in the path list. Following step 576, the "cost" of this initial route is assessed, and compared to the cost limit (e.g. total journey time and/or distance) inputted at step 508. If the cost of the initial route exceeds the cost limit "$l_t$", the route-planning algorithm quits, because it is impossible to iterate the route to visit attractors if the initial route does not even meet the cost limit. Alternatively, if the cost of the initial path is too great, step 574 could be repeated to try to find an alternative initial route path meeting the cost limit, or the process may return to step 508 at which the user may be prompted to increase the cost limits, or else choose start and destination locations that are closer to each other.

If at step 570 it is determined that that the start and destination locations are the same, the process proceeds through step 572 at which a dummy initial path p is set in the path list P. As explained above, the dummy initial path p is provided to enable iteration, and also enable the same algorithm to be used whether or nor the start and destination locations are different. An example dummy initial path has an initial vertex = end vertex = s = d. The cost "l" is set to zero. Such a path might be of little meaning as a real navigation segment, but this dummy path will be replaced as soon as the algorithm iterates the route to visit an attractor. An alternative example of a dummy path is a short circuit extending around the start/destination location.

Following step 550, the process proceeds to a further initialisation step 580 of initialising a potential or candidate set A of attractors, which is a dynamic list of attractors of interest for the sightseeing route. The set A is dynamic in the sense that, as the process progresses iteratively and attractors are included in the route or excluded as candidates for visit, the respective attractors are removed from the set A. The set A may require initialization to fill the set with all attractors that may be candidates to visit. The set A may be more limited than a global list of attractors stored in the attractors database component 504. The set A may be limited by one or more of:

Step 582: excluding attractors that do not match the user selection criteria. For example, attractors not matching the preference category selected by the user, or having an attraction value less than the threshold set by the user;

Step 584: excluding attractors that have been already been visited recently (as explained above);

Step 586: excluding attractors that are more distant from the initial path p than would be allowed by the route-cost defined by the user. This can achieved by calculating the maximum geometric distance that can be travelled from any vertex on the initial path p within this cost limit, and then only including those attractors in the database 504 that are within this geometric distance from p.

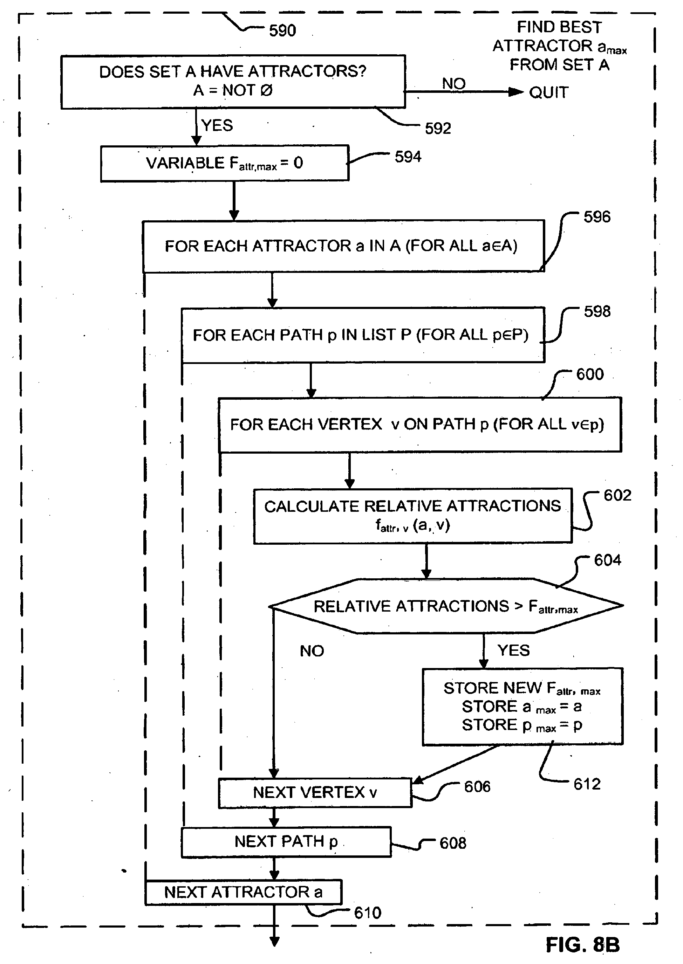

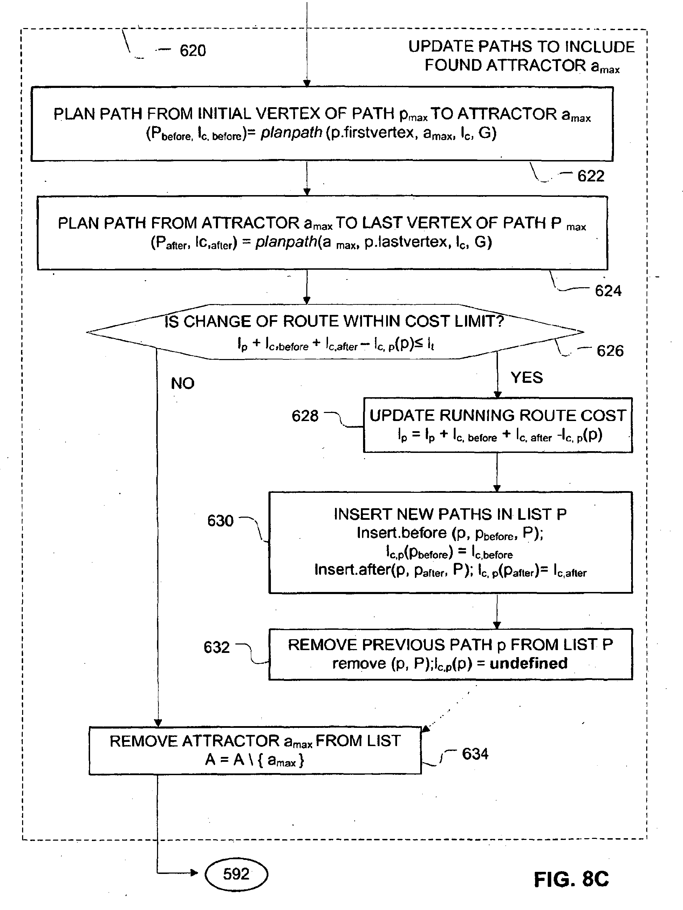

Following the initialisation steps 550 and 580, the process proceeds to the main loop steps of: step 590 (Fig. 8b) of finding and selecting a best attractor $a_{max}$ from set A for extending the route to visit this attractor; and step 620 (Fig. 8c) of updating the path list P to extend the route to visit the respective attractor.

Referring to Fig. 8b, step 590 starts with an initial verification step 592 that the candidate set A of candidate attractors is not empty. If the set A is empty, this means that all candidate attractors have been evaluated, and process quits because the route calculation algorithm has been completed.

In order to find a "best" attractor to visit, an evaluation calculation is used to evaluate a value of "relative attraction", as a function of (i) the attraction value of an attractor, and (ii) the distance between the attractor and the current route, or a respective vertex v thereon. The relative attraction function increases (linearly or non-linearly) as the attraction value of the attractor increases. The relative attraction function decreases (linearly or non-linearly) as the distance increases. The relative attraction function therefore provides a weighting dependent not only on how interesting the attractor is to visit, but also dependent on how far the route will have to deviate to visit the attractor. The relative attraction between a vertex position v and an attractor a may be expressed as:

$$f_{attr.v}(a,v) = \frac{f_{attr}(a)}{g(a,v)}$$

where $f_{attr}(a)$ is the attraction value (or a function of the attraction value) of the attractor a, and g(a,v) is a function of, or expressing, the distance between the vertex v and the location of the attractor a. For example, g(a,v) may be the Euclidian or geodetic distance between a and v. Alternatively, for greater precision, g(a,v) may be a calculated route length between a and v along one or more edges E.

It can be seen that the above calculation is based on a vertex position v, not an entire route. Therefore, for a given attractor a, the calculation should be repeated for each vertex v along the current route defined by the path list P, in order to carry out the evaluation for the route as a whole. The current route may be divided into a sequence of individual segments or paths "p", and so the calculation is repeated for each vertex v in each path p of the path list P. The goal is to find which attractor a generates the highest relative attraction, and relative to which vertex in the current route. An evaluation variable $F_{attr,max}$ is used to keep a running record of the greatest value of the relative attraction relative to which to compare new calculations. After having initialised the evaluation variable $F_{attr,max}$ to zero at step 594, the calculation of relative attraction is performed repetitively within a series of nested loops indexed for different variables:

Loop steps 596/610: for each attractor "a" in the set A of candidate attractors;
Loop steps 600/608: for each path "p" in the path list P; and
Loop steps 602/606: for each vertex "v" along the path "p" selected in step 600.

Upon each pass through these loops, step 602 performs the calculation of $f_{attr,v}$ for the different values of "v" and "a" defined by the loop indexes. Step 604 compares the newly calculated $f_{attr,v}$ with the evaluation variable $F_{attr,max}$, to identify whether the newly calculated $f_{attr,v}$ exceeds the previous largest value stored as $F_{attr,max}$. If the newly calculated $f_{attr,v}$ is larger, the process proceeds through step 612 at which the value of $F_{attr,max}$ is updated with the newly calculated value; an attractor index $a_{max}$ is set with the value of "a" identifying the attractor that generated the new largest relative attraction, and a path index $p_{max}$ is set with the value indicating relative to which path p of the path list P the attractor $a_{max}$ produced the new largest relative attraction.

The loops increment in nested fashion at steps 606-610, after which step 590 completes and the process proceeds to step 620. Upon completion of step 590, the attractor index $a_{max}$ identifies which attractor "a" from the set A of candidate attractors resulted in the greatest relative attraction, and the path index $p_{max}$ indicates relative to which path "p" of the path list P the attractor $a_{max}$ produced the greatest relative attraction.

The principles of step 620 (Fig. 8c) will firstly be explained before the step 620 is described in detail. Referring to Fig. 9a, an example attractor $a_{max}$ is illustrated positioned to the closest path $p_{max}$ that resulted in the greatest relative attraction. The path $p_{max}$ extends from a first vertex 562 along one or more edges and intermediate vertices 566 to a last vertex 564 of the path $p_{max}$. Referring to Fig. 9b, the principle of step 620 is to generate two new candidate paths $p_{before}$ and $p_{after}$ that extend the route to visit the attractor $a_{max}$. The path $p_{before}$ extends from the previous first vertex 562 to a new vertex 568 at the attractor $a_{max}$. The path $p_{after}$ extends from the new vertex 568 (as the first vertex of the path) to the previous last vertex 564. As may be seen in Fig. 9b, the paths may optionally extend on at least one of the previous edges used by $p_{max}$. Also, the new paths may have at least one co-located edge, except that the edge is directional, and opposite directions are used in the two paths. These new paths $p_{before}$ and $p_{after}$ are then used to replace the previous path $p_{max}$ in the path list P, thereby modifying the route to visit the attractor $a_{max}$. The number of individual paths p in the path list P increases by one.

Referring to Fig. 8c, the step 620 is shown in detail. At step 622, the route calculation function *planpath* is invoked to calculate the first new candidate path $p_{before}$ extending from the previous first vertex 562 to the respective vertex 568 at the attractor $a_{max}$. At step 624, the route calculation function *planpath* is again invoked to calculate the second new candidate path $p_{after}$ extending from the new vertex 568 to the previous last vertex 564. Step 626 evaluates (i) the change in cost of the route were the two new paths $p_{before}$ and $p_{after}$ to be used in place of $p_{max}$, and (ii) whether the change in cost would cause the cost limit to be exceeded. As explained above, a running index of the cost $I_c$ is preferably maintained alongside each path p in the path list, as is a running total cost $I_p$ of all paths. A cost is also calculated as part of the *planpath* function. Therefore, step 626 involves simply adding to the running total cost $I_p$ the additional costs of $p_{before}$ and $p_{after}$ calculated by the *planpath* function, and subtracting the cost $I_c$ associated in the path list with $p_{max}$.

If the evaluation at step 626 indicates that the cost limit is not exceeded, this indicates that the route may be modified; the new paths $p_{before}$ and $p_{after}$ may be used in place of $p_{max}$, and the attractor $a_{max}$ included on the sightseeing route. The processing proceeds to step 628 at which the running total cost $I_p$ is updated with the new cost. At step 630, the new paths $p_{before}$ and $p_{after}$ are inserted into the path list P. A function *insert.before* is invoked to insert the path $p_{before}$ into the path list at a position immediately preceding $p_{max}$. A function *insert.after* is invoked to insert the path $p_{after}$ into the path list at a position immediately following $p_{max}$. At step 632, the previous path $p_{max}$ is removed from the path list. A *remove* function is invoked to remove $p_{max}$. This completes the replacement of the previous path $p_{max}$ by the new paths $p_{before}$ and $p_{after}$ to extend the route to visit the attractor $a_{max}$. At step 634 the attractor $a_{max}$ is removed from the set A of candidate attractors, because the attractor $a_{max}$ has now been incorporated in the route.

If the evaluation at step 626 indicates that the cost limit would be exceeded, this indicates that the route may not be modified; the new candidate paths $p_{before}$ and $p_{after}$ cannot be used. The attractor $a_{max}$ cannot therefore be visited on this route. Processing procceds directly from step 626 to 634 without passing through steps 628-632. At step 634, the attractor $a_{max}$ is removed from the set A of candidate attractors (for reason that the attractor $a_{max}$ is no longer a candidate attractor; this attractor has been tried but failed to be included in the route without exceeding the route cost limit).

Following step 634, the process returns to step 592 of step 590 for finding another best attractor of the set A of candidate attractors. The algorithm therefore repeats until all attractors have been evaluated and either included in the route, or discarded because extending the route would exceed the cost limit. Once the candidate set A of remaining candidate attractors is empty, the process quits at step 592.

It will be appreciated that the above technique can enable a sightseeing route to be calculated, whether or not the start and destination locations are the same. Candidate attractors are evaluated and, using an iterative process, a best candidate attractor is identified according to a relative attraction function. New paths are created to extend one of the existing paths to the best candidate attractor, and the new paths replace the respective existing path if the inclusion of the new paths does not cause the total route cost to exceed a cost limit. Whether or not the new paths are included, the best candidate attractor is removed from the list of candidate attractors for iterative evaluation.

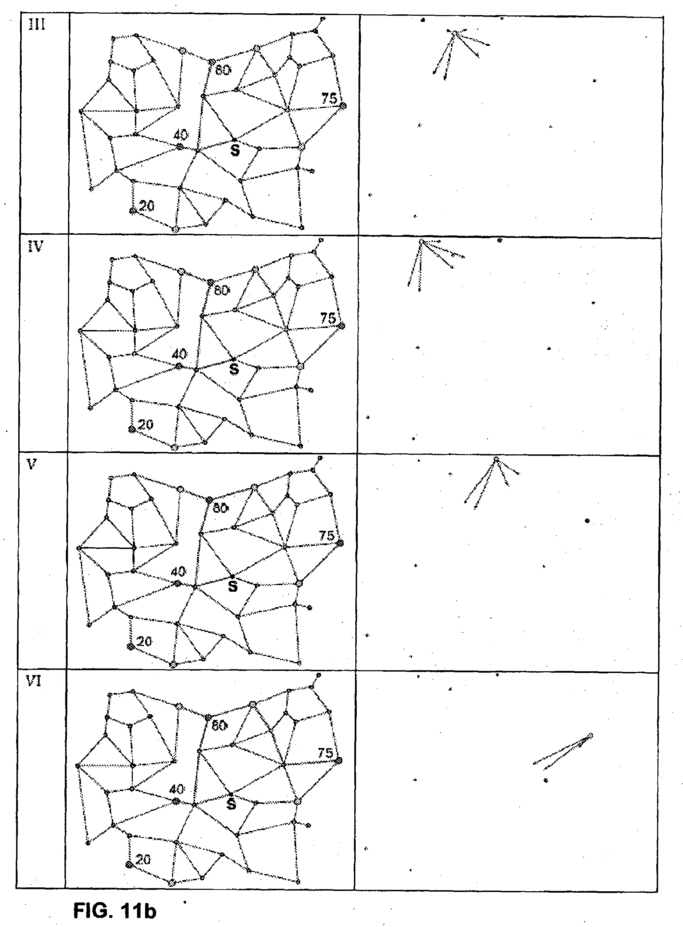

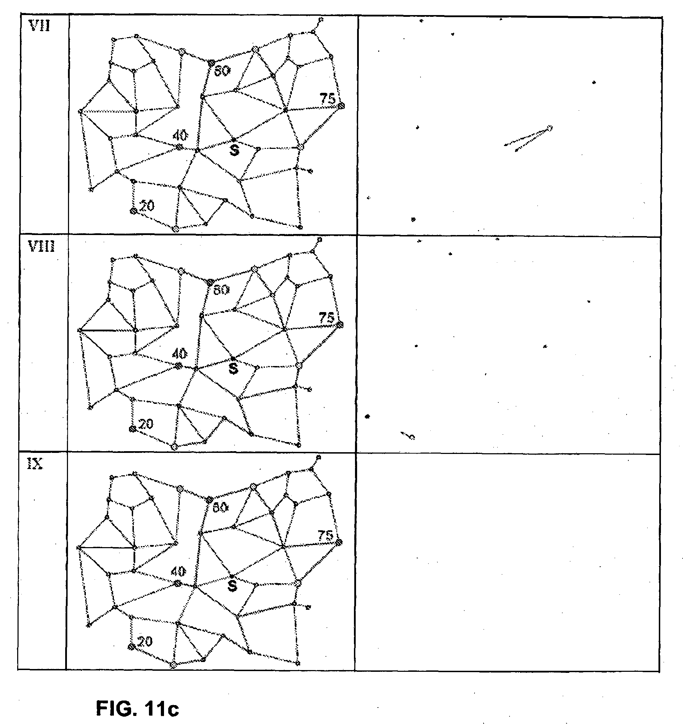

Fig. 11 illustrates graphically application of the above algorithm in a chart showing nine route calculation stages I - IX. In order to avoid obscuring the detail, the return path is generally not illustrated, except in the completed route shown in the final stage. Each Figure illustrates in vector form the attraction values 650 observed at a selected vertex position (here the most recently added attractor). The relative attraction (not depicted) is dependent on these attraction values, and on the distance of the attractor to the respective vertex.

The above algorithm for choosing a route may be advantageous for a number of reasons:

(i) the same algorithm can be used whether the start and destination locations are the same as or different from each other;

(ii) the algorithm functions by extending or expanding an initial or pilot route (even a dummy route if appropriate) that already extends from the start location to the destination location. Therefore, the route already contains a path to the destination, and it is not necessary to have to complete an unknown segment of route, nor leave open a segment of the route. Also, the algorithm can verify at each stage the cost of the route, and whether the route meets the cost limit imposed by the user;

(iii) the algorithm can extend the route to visit an attractor, from any vertex already along the route. This enables the most appropriate vertex to be used, promoting desirable expansion or extension of the route from start to destination.

It is envisaged that many modifications of the above-described algorithm, and many alternative algorithms, may be used as desired. For example, whereas the previously described algorithm is based on an iterative approach of extending an initial or pilot route (even a dummy route), an alternative algorithm may be based on a "where-shall-I-go-next" decision made after each attractor is added. Instead of evaluating the relative attraction for every vertex along the route, the relative attraction is evaluated for every remaining candidate attractor, but only relative to the single vertex representing the location of the attractor to which the route was most recently extended. This may simplify some processing, and lead to the progressive route development seen in Figs. 11 to 20.

It will also be appreciated that whilst various aspects and embodiments of the present invention have heretofore been described, the scope of the present invention is not limited to the particular arrangements set out herein and instead extends to encompass all arrangements, and modifications and alterations thereto, which fall within the scope of the appended claims.

For example, whilst embodiments described in the foregoing detailed description refer to GPS, it should be noted that the navigation device may utilise any kind of position sensing technology as an alternative to (or indeed in addition to) GPS. For example the navigation device may utilise using other global navigation satellite systems such as the European Galileo system. Equally, it is not limited to satellite based but could readily function using ground based beacons or any other kind of system that enables the device to determine its geographic location.

Additionally, the enhanced content of a digital map may be used by other devices, such as navigation and/or route planning servers, that might not themselves have a self-contained positioning system. For example, several internet web-sites offer the possibility of route planning from a start location to a destination location, according to user-selectable criteria. The results may be downloaded or printed for later use. The invention extends to cover such use without real-time navigation using a positioning system.

It will also be well understood by persons of ordinary skill in the art that whilst the preferred embodiment implements certain functionality by means of software, that functionality could equally be implemented solely in hardware (for example by means of one or more ASICs (application specific integrated circuit)) or indeed by a mix of hardware and software. As such, the scope of the present invention should not be interpreted as being limited only to being implemented in software.

## Claims

1. Apparatus (200) for calculating a route from a start location to a destination location, the route passing one or more attractors each representing a sightseeing attraction, the apparatus comprising:

a digital database resource (500) containing digital map information, the digital map information including a plurality of attractors; and
a processing resource (210) configured to:

(a) determine (550) an initial route from the start location to the destination location, the initial route having a route cost, and set the initial route as a current route;
(b) determine (602) for each attractor in a candidate set of the attractors, a relative attraction value that is dependent on a distance between the attractor and the current route;
(c) determine (604,612) which attractor corresponds to a largest attraction value; and
(d) modify (620) the current route to include a deviation to the attractor determined at step (c);

**characterised in that** step (d) comprises:

determining a candidate modification of the current route to deviate to the attractor determined at step (c);
determining whether the candidate modification if included in the current route would cause the route cost of the current route to exceed a cost limit; and
selectively including the candidate modification in the current route only if the cost limit is not exceeded.

2. The apparatus of claim 1, wherein the processing resource is further configured to modify the current route iteratively by repeating steps (b) to (d).

**3.** The apparatus claim 1 or 2, wherein step (d) comprises the sub-step of removing (634) from the candidate set of attractors, the attractor determined in step (c).

**4.** The apparatus of any preceding claim, wherein the route cost is selected as one or more of: a route distance; a travel time of the route; a financial cost of journeying along the route.

**5.** The apparatus of any preceding claim, wherein the processing resource is further configured to receive (508) user input representing the cost limit, and to store the cost limit.

**6.** The apparatus of any preceding claim, wherein the processing resource is configured to repeat steps (b) to (d) until the candidate set of attractors is empty.

**7.** The apparatus of any preceding claim, wherein the relative attraction value is a function that increases for a decrease in distance.

**8.** The apparatus of any preceding claim, wherein each attractor is associated with a respective attraction value representing a relative weighting of the attractor for visits, and the relative attraction value is a function that increases for an increase in attraction value.

**9.** The apparatus of any preceding claim, wherein the step (b) comprises calculating the relative attraction value between an attractor and each vertex of the current route.

**10.** The apparatus of any preceding claim, wherein the initial route is a dummy route of zero cost and zero path length, in the case that the start location is the same as the destination location.

**11.** The apparatus of any preceding claim, wherein the current route is stored as one or more paths, said one or more paths defining contiguous route segments from the start location to the destination location, and wherein step (d) comprises:

  replacing (630,632) a selected path by a first new path and a second new path, the first new path extending from a start vertex of said selected path to the attractor, and the second new path extending from the attractor to an end vertex of said selected path.

**12.** The apparatus of any preceding claim, wherein the apparatus is a navigation apparatus, optionally a portable navigation device, incorporating a positioning system.

**13.** A method for automated route calculation from a start location to a destination location using information contained in a digital database resource (500) containing digital map information, the digital map information including a plurality of attractors each representing a sightseeing attraction, and the route passing one or more of the attractors, the method comprising the steps of:

  (a) determining (550) an initial route from the start location to the destination location, the initial route having a route cost, and setting the initial route as a current route;
  (b) determining (602) for each attractor in a candidate set of the attractors, a relative attraction value that is dependent on a distance between the attractor and the current route;
  (c) determining (604, 612) which attractor corresponds to a largest attraction value; and
  (d) modifying (620) the current route to include a deviation to the attractor determined at step (c);

  **characterised in that** step (d) comprises:

  determining a candidate modification of the current route to deviate to the attractor determined at step (c);
  determining whether the candidate modification if included in the current route would cause the route cost of the current route to exceed a cost limit; and
  selectively including the candidate modification in the current route only if the cost limit is not exceeded.

**14.** A computer program, which when executed by a processing resource, causes the processing resource to implement a method for automated route calculation from a start location to a destination location using information contained in a digital database resource (500) containing digital map information, the digital map information including a plurality of attractors each representing a sightseeing attraction, and the route passing one or more of the attractors, the method comprising the steps of:

  (a) determining (550) an initial route from the start location to the destination location, the initial route having a route cost, and setting the initial route as a current route;
  (b) determining (602) for each attractor in a candidate set of the attractors, a relative attraction value that is dependent on a distance between the attractor and the current route;
  (c) determining (604, 612) which attractor corresponds to a largest attraction value; and
  (d) modifying (620) the current route to include a deviation to the attractor determined at step (c)

**characterised in that** step (d) comprises:

determining a candidate modification of the current route to deviate to the attractor determined at step (c);
determining whether the candidate modification if included in the current route would cause the route cost of the current route to exceed a cost limit; and
selectively including the candidate modification in the current route only if the cost limit is not exceeded.

15. A machine readable information carrier carrying or embodying the computer program defined in claim 14.


**Patentansprüche**

1. Vorrichtung (200) zum Berechnen einer Route von einem Startstandort zu einem Zielstandort, wobei die Route einen oder mehrere Anziehungspunkte passiert, wobei die Vorrichtung folgendes aufweist:

eine digitale Datenbankressource (500), die digitale Karteninformation enthält, wobei die digitale Karteninformation mehrere Anziehungspunkte umfasst; und
eine Verarbeitungsressource (210), die für folgendes konfiguriert ist:

(a) Bestimmen (550) einer Initialroute vom Startstandort zum Zielstandort, wobei die Initialroute Routenkosten haben, und Festlegen der Initialroute als eine gegenwärtige Route;
(b) Bestimmen (602) für jeden Anziehungspunkt in einem Kandidatensatz von Anziehungspunkten eines relativen Anziehungswerts, der abhängig ist von einem Abstand zwischen dem Anziehungspunkt und der gegenwärtigen Route;
(c) Bestimmen (604, 612), welcher Anziehungspunkte einem größten Anziehungswert entspricht; und
(d) Modifizieren (620) der gegenwärtigen Route, um eine Abweichung zu dem in Schritt (c) bestimmten Anziehungspunkt zu umfassen;

**dadurch gekennzeichnet, dass** Schritt (d) folgendes umfasst:

Bestimmen einer Kandidatenmodifizierung der gegenwärtigen Route, um zu dem in Schritt (c) bestimmten Anziehungspunkt abzuweichen;
Bestimmen, ob die Kandidatenmodifizierung, falls sie in der gegenwärtigen Route enthalten ist, bei den Routenkosten ein Überschreiten einer Kostengrenze bewirken würde; und
selektives Einschließen der Kandidatenmodifizierung der gegenwärtigen Route nur dann, wenn die Kostengrenze nicht überschritten wird.

2. Vorrichtung nach Anspruch 1, wobei die Verarbeitungsressource ferner für ein Modifizieren der gegenwärtigen Route iterativ durch Wiederholen der Schritte (b) bis (d) konfiguriert ist.

3. Vorrichtung nach Anspruch 1 oder 2, wobei der Schritt (d) den Unterschritt eines Entfernens (634) des in Schritt (c) bestimmten Anziehungspunkts aus dem Kandidatensatz von Anziehungspunkten umfasst.

4. Vorrichtung nach einem der vorhergehenden Ansprüche, wobei die Routenkosten als eines oder mehrere von Folgenden ausgewählt ist: einer Routenentfernung, einer Reisezeit für die Route, ein finanzieller Kostenaufwand für Reisen entlang der Route.

5. Vorrichtung nach einem der vorhergehenden Ansprüche, wobei die Verarbeitungsressource ferner zum Empfangen (508) von der Kostengrenze repräsentierender Nutzereingabe und zum Speichern der Kostengrenze konfiguriert ist.

6. Vorrichtung nach einem der vorhergehenden Ansprüche, wobei die Verarbeitungsressource zum Wiederholen der Schritte (b) bis (d), bis der Kandidatensatz von Anziehungspunkten leer ist, konfiguriert ist.

7. Vorrichtung nach einem der vorhergehenden Ansprüche, wobei der relative Anziehungswert eine Funktion ist, die mit der Abnahme der Entfernung zunimmt.

8. Vorrichtung nach einem der vorhergehenden Ansprüche, wobei jedem Anziehungspunkt ein jeweiliger, eine relative Wichtung des Anziehungspunkts für Besuche repräsentierender Anziehungswert zugeordnet wird und der relative Anziehungswert eine Funktion ist, die mit einer Zunahme des Anziehungswerts zunimmt.

9. Vorrichtung nach einem der vorhergehenden Ansprüche, wobei der Schritt (b) ein Berechnen des relativen Anziehungswerts zwischen einem Anziehungspunkt und jedem Vertex der gegenwärtigen Route aufweist.

**10.** Vorrichtung nach einem der vorhergehenden Ansprüche, wobei die Initialroute eine Dummy-Route mit null Kosten und null Pfadlänge in dem Fall, dass der Start-Standort der gleiche ist wie der Ziel-Standort ist, ist.

**11.** Vorrichtung nach einem der vorhergehenden Ansprüche, wobei die gegenwärtige Route als einer oder mehrere Pfade gespeichert wird, wobei der eine Pfad beziehungsweise die mehreren Pfade fortlaufende Routensegmente vom Start-Standort bis zum Ziel-Standort definiert/definieren, und wobei der Schritt (d) folgendes aufweist:

Ersetzen (630, 632) eines gewählten Pfades durch einen ersten neuen Pfad und einen zweiten neuen Pfad, wobei der erste Pfad sich von einem Startvertex des gewählten Pfades bis zum Anziehungspunkt und der zweite neue Pfad sich von dem Anziehungspunkt bis zu einem Endvertex des gewählten Pfades erstrecken.

**12.** Vorrichtung nach einem der vorhergehenden Ansprüche, optional ein tragbares Navigationsgerät, das ein Positionierungssystem umfasst.

**13.** Verfahren für automatisierte Routenberechnung von einem Startstandort zu einem Zielstandort mit Anwenden von in einer digitalen Datenbankressource (500) enthaltener Information, die digitale Karteninformation enthält, wobei die digitale Karteninformation mehrere Anziehungspunkte, die jeder eine Sehenswürdigkeit repräsentieren, enthält, und wobei die Route einen oder mehrere der Anziehungspunkte passiert, wobei das Verfahren die folgenden Schritte umfasst:

(a) Bestimmen (550) einer Initialroute vom Startstandort zum Zielstandort, wobei die Initialroute Routenkosten haben, und Festlegen der Initialroute als eine gegenwärtige Route;
(b) Bestimmen (602) für jeden Anziehungspunkt in einem Kandidatensatz von Anziehungspunkten eines relativen Anziehungswerts, der abhängig ist von einem Abstand zwischen dem Anziehungspunkt und der gegenwärtigen Route;
(c) Bestimmen (604, 612), welcher Anziehungspunkte einem größten Anziehungswert entspricht; und
(d) Modifizieren (620) der gegenwärtigen Route, um eine Abweichung zu dem in Schritt (c) bestimmten Anziehungspunkt zu umfassen;

**dadurch gekennzeichnet, dass** Schritt (d) folgendes umfasst:

Bestimmen einer Kandidatenmodifizierung der gegenwärtigen Route, um zu dem in Schritt (c) bestimmten Anziehungspunkt abzuweichen;
Bestimmen, ob die Kandidatenmodifizierung, falls sie in der gegenwärtigen Route enthalten ist, bei den Routenkosten ein Überschreiten einer Kostengrenze bewirken würde; und
selektives Einschließen der Kandidatenmodifizierung der gegenwärtigen Route nur dann, wenn die Kostengrenze nicht überschritten wird.

**14.** Computerprogramm, das bei Ausführen durch eine Verarbeitungsressource bewirkt, dass die Verarbeitungsressource ein Verfahren für automatische Routenberechnung von einem Startstandort zu einem Zielstandort bei Anwenden von Information, die in einer digitalen Datenbankressource (500), die digitale Karteninformation enthält, implementiert, wobei die digitale Karteninformation mehrere Anziehungspunkte, die jeder eine Sehenswürdigkeit repräsentieren, enthält, und wobei die Route einen oder mehrere der Anziehungspunkte passiert, wobei das Verfahren die folgenden Schritte umfasst:

(a) Bestimmen (550) einer Initialroute vom Startstandort zum Zielstandort, wobei die Initialroute Routenkosten haben, und Festlegen der Initialroute als eine gegenwärtige Route;
(b) Bestimmen (602) für jeden Anziehungspunkt in einem Kandidatensatz von Anziehungspunkten eines relativen Anziehungswerts, der abhängig ist von einem Abstand zwischen dem Anziehungspunkt und der gegenwärtigen Route;
(c) Bestimmen (604, 612), welcher Anziehungspunkte einem größten Anziehungswert entspricht; und
(d) Modifizieren (620) der gegenwärtigen Route, um eine Abweichung zu dem in Schritt (c) bestimmten Anziehungspunkt zu umfassen;

**dadurch gekennzeichnet, dass** Schritt (d) folgendes umfasst:

Bestimmen einer Kandidatenmodifizierung der gegenwärtigen Route, um zu dem in Schritt (c) bestimmten Anziehungspunkt abzuweichen;
Bestimmen, ob die Kandidatenmodifizierung, falls sie in der gegenwärtigen Route enthalten ist, bei den Routenkosten ein Überschreiten einer Kostengrenze bewirken würde; und
selektives Einschließen der Kandidatenmodifizierung der gegenwärtigen Route nur dann, wenn die Kostengrenze nicht überschritten wird.

**15.** Maschinenlesbarer Informationsträger, der das in Anspruch 14 definierte Computerprogramm trägt oder umfasst.

## Revendications

1. Appareil (200) pour calculer un itinéraire depuis un lieu de départ vers un lieu d'arrivée, l'itinéraire passant par un point d'attraction ou plus représentant chacun une attraction touristique, l'appareil comprenant :

   une ressource de base de données numériques (500) contenant des informations de carte numérique, la carte numérique comportant une pluralité de points d'attraction ; et
   une ressource de traitement (210) configurée pour :

   (a) déterminer (550) un itinéraire initial depuis le lieu de départ vers le lieu d'arrivée, l'itinéraire initial ayant un coût d'itinéraire, et définir l'itinéraire initial comme itinéraire actuel ;
   (b) déterminer (602) pour chaque point d'attraction parmi un ensemble candidat de points d'attraction une valeur d'attraction relative qui dépend de la distance entre le point d'attraction et l'itinéraire actuel ;
   (c) déterminer (604, 612) quel point d'attraction correspond à la plus grande valeur d'attraction ; et
   (d) modifier (620) l'itinéraire actuel pour lui adjoindre une déviation vers le point d'attraction déterminé à l'étape (c) ; ·

   **caractérisé en ce que** (d) comprend :

   la détermination d'une modification candidate à l'itinéraire actuel pour dévier vers le point d'attraction déterminé à l'étape (c) ;
   la détermination du dépassement ou non du coût d'itinéraire de l'itinéraire actuel par rapport à une limite de coût si la modification candidate est incluse à l'itinéraire actuel ; et
   l'inclusion sélective de la modification candidate à l'itinéraire actuel seulement si la limite de coût n'est pas dépassée.

2. L'appareil de la revendication 1, dans lequel la ressource de traitement est d'autre part configurée pour modifier l'itinéraire actuel de manière itérative en répétant les étapes (b) à (d).

3. L'appareil revendication 1 ou 2, dans lequel l'étape (d) comprend la sous-étape de suppression (634) du point d'attraction déterminé à l'étape (c) pour l'éliminer de l'ensemble candidat de points d'attraction.

4. L'appareil d'une quelconque revendication précédente, dans lequel le cout d'itinéraire est sélectionné parmi au moins une des valeurs suivantes : une distance d'itinéraire, un temps de trajet pour l'itinéraire, et un coût financier de cheminement sur l'itinéraire.

5. L'appareil d'une quelconque revendication précédente, dans lequel la ressource de traitement est en outre configurée pour recevoir (508) une saisie de l'utilisateur représentant la limite de coût, ainsi que pour enregistrer cette limite de coût.

6. L'appareil d'une quelconque revendication précédente dans lequel la ressource de traitement est configurée pour répéter les étapes (b) à (d) jusqu'à ce que l'ensemble candidat de points d'attraction soit vide.

7. L'appareil d'une quelconque revendication précédente, dans lequel la valeur d'attraction relative est une fonction qui augmente à mesure que la distance diminue.

8. L'appareil d'une quelconque revendication précédente, dans lequel chaque point d'attraction est associé à une valeur d'attraction respective représentant une pondération relative du point d'attraction pour des visites, et la valeur d'attraction relative est une fonction qui augmente à mesure que la valeur d'attraction augmente.

9. L'appareil d'une quelconque revendication précédente, dans lequel l'étape (b) comprend le calcul de la valeur d'attraction relative entre un point d'attraction et chaque sommet de l'itinéraire actuel.

10. L'appareil d'une quelconque revendication précédente, dans lequel l'itinéraire initial est un itinéraire factice, de coût nul et de longueur de chemin nulle, au cas où le lieu de départ est identique au lieu d'arrivée.

11. L'appareil d'une quelconque revendication précédente, dans lequel l'itinéraire actuel est enregistré sous forme d'au moins un chemin, ledit au moins un chemin définissant des segments d'itinéraire contigus depuis le lieu de départ vers le lieu d'arrivée, et dans lequel l'étape (d) comprend :

    le remplacement (630,632) d'un chemin sélectionné par un premier nouveau chemin et un deuxième nouveau chemin, le premier nouveau chemin s'étendant entre un sommet de départ dudit chemin sélectionné et le point d'attraction, et le deuxième nouveau chemin s'étendant entre le point d'attraction et un sommet d'arrivée dudit chemin sélectionné.

12. L'appareil d'une quelconque revendication précédente, où l'appareil est un appareil de navigation, et de manière facultative un dispositif de navigation portable, incorporant un système de localisation.

**13.** Une méthode pour le calcul automatique d'itinéraire depuis un lieu de départ vers un lieu d'arrivée au moyen d'informations contenues dans une ressource de base de données numériques (500) contenant des informations de cartes numériques, les informations de cartes numériques comportant une pluralité de points d'attraction représentant chacun une attraction touristique, et l'itinéraire passant par au moins un des points d'attraction, la méthode comportant les étapes suivantes :

(a) la détermination (550) d'un itinéraire initial depuis le lieu de départ vers le lieu d'arrivée, l'itinéraire initial ayant un coût d'itinéraire, et la définition de l'itinéraire initial comme itinéraire actuel ;
(b) la détermination (602), pour chaque point d'attraction parmi un ensemble candidat de points d'attraction, d'une valeur relative d'attraction qui dépend de la distance entre le point d'attraction et l'itinéraire actuel ;
(c) la détermination (604, 612) de quel point d'attraction correspond à la plus grande valeur d'attraction ; et
(d) la modification (620) de l'itinéraire actuel pour lui adjoindre une déviation vers le point d'attraction déterminé à l'étape (c) ; ·

**caractérisé en ce que** (d) comprend :

la détermination d'une modification candidate à l'itinéraire actuel pour dévier vers le point d'attraction déterminé à l'étape (c) ;
la détermination du dépassement ou non du coût d'itinéraire de l'itinéraire actuel par rapport à une limite de coût si la modification candidate est incluse à l'itinéraire actuel ; et
l'inclusion sélective de la modification candidate à l'itinéraire actuel seulement si la limite de coût n'est pas dépassée.

**14.** Un programme d'ordinateur, qui lorsqu'il est exécuté par une ressource de traitement, fait mettre en oeuvre à la ressource de traitement une méthode de calcul automatique d'itinéraire depuis un lieu de départ vers un lieu d'arrivée au moyen d'informations contenues dans une ressource de base de données numériques (500) contenant des informations de cartes numériques, les informations de cartes numériques comportant une pluralité de points d'attraction représentant chacun une attraction touristique, et l'itinéraire passant par au moins un des points d'attraction, la méthode comportant les étapes suivantes :

(a) la détermination (550) d'un itinéraire initial depuis le lieu de départ vers le lieu d'arrivée, l'itinéraire initial ayant un coût d'itinéraire, et la définition de l'itinéraire initial comme itinéraire actuel ;
(b) la détermination (602), pour chaque point d'attraction parmi un ensemble candidat de points d'attraction, d'une valeur relative d'attraction qui dépend de la distance entre le point d'attraction et l'itinéraire actuel ;
(c) la détermination (604, 612) de quel point d'attraction correspond à la plus grande valeur d'attraction ; et
(d) la modification (620) de l'itinéraire actuel pour lui adjoindre une déviation vers le point d'attraction déterminé à l'étape (c)

**caractérisé en ce que** (d) comprend :

la détermination d'une modification candidate à l'itinéraire actuel pour dévier vers le point d'attraction déterminé à l'étape (c) ;
la détermination du dépassement ou non du coût d'itinéraire de l'itinéraire actuel par rapport à une limite de coût si la modification candidate est incluse à l'itinéraire actuel ; et
l'inclusion sélective de la modification candidate à l'itinéraire actuel seulement si la limite de coût n'est pas dépassée.

**15.** Un support d'informations lisibles par une machine portant ou incarnant le programme d'ordinateur défini à la revendication 14.

**FIG. 1**

**FIG. 2**

EP 2 454 557 B1

| SERVER |
|---|

| PROCESSOR | TRANSMITTER |
|---|---|

304    308

| MEMORY | RECEIVER |
|---|---|

306    310

302

314

312

| MASS DATA STORAGE |
|---|

COMMUNICATIONS
CHANNEL

318

| NAVIGATION DEVICE |
|---|

| TRANSMITTER | GPS |
|---|---|

320

| RECEIVER | DISPLAY |
|---|---|

322

200

**FIG. 3**

290 — 200

294

292

FIG. 4a

290 — 200

294

292

FIG. 4b

| | 482 |
| GUI / MAP RENDERER | 484 |
| POSITIONING SYSTEM | 486 |
| ROUTE PLANNING | 487 |
| NAVIGATION | 480 |
| APPLICATION SOFTWARE | 470 |
| OPERATING SYSTEM | |
| HARDWARE | 460 |

**FIG. 5**

**FIG.6**

**FIG. 7**

INPUT USER PREFERENCES — 508

550

INITIALIZE
PATHS
LIST P

— 570

DESTINATION d= START s ?

YES

NO

CALCULATE
INITIAL ROUTE
PATHS
— 574

SET DUMMY
PATH
— 572

CHECK COST
$I \leq It$

NO → QUIT

YES — 576

580

INITIALIZE
ATTRACTORS
SET A

582 — EXCLUDE NON-MATCHING ATTRACTORS

584 — EXCLUDE RECENTLY VISITED ATTRACTORS

586 — EXCLUDE ATTRACTORS TOO DISTANT
TO MATCH COST

**FIG. 8A**

FIND BEST
ATTRACTOR $a_{max}$
FROM SET A

590

DOES SET A HAVE ATTRACTORS?
A = NOT Ø

NO ─────► QUIT

592

YES

VARIABLE $F_{attr,max} = 0$ ─── 594

FOR EACH ATTRACTOR a IN A (FOR ALL a∈A) ─── 596

FOR EACH PATH p IN LIST P (FOR ALL p∈P) ─── 598

FOR EACH VERTEX v ON PATH p (FOR ALL v∈p) ─── 600

CALCULATE RELATIVE ATTRACTIONS
$f_{attr, v}(a, v)$ ─── 602

RELATIVE ATTRACTIONS > $F_{attr,max}$ ─── 604

NO                    YES

STORE NEW $F_{attr, max}$
STORE $a_{max} = a$
STORE $p_{max} = p$

612

NEXT VERTEX v ─── 606

NEXT PATH p ─── 608

NEXT ATTRACTOR a
610

**FIG. 8B**

25

— 620

UPDATE PATHS TO INCLUDE
FOUND ATTRACTOR $a_{max}$

PLAN PATH FROM INITIAL VERTEX OF PATH $p_{max}$ TO ATTRACTOR $a_{max}$
$(P_{before}, I_{c, before})=$ *planpath* $(p.firstvertex, a_{max}, I_c, G)$

— 622

PLAN PATH FROM ATTRACTOR $a_{max}$ TO LAST VERTEX OF PATH $P_{max}$
$(P_{after}, Ic_{,after}) =$ *planpath* $(a_{max}, p.lastvertex, I_c, G)$

— 624

IS CHANGE OF ROUTE WITHIN COST LIMIT?
$I_p + I_{c,before} + I_{c,after} - I_{c, p}(p) \leq I_t$

— 626

NO

YES

628 —

UPDATE RUNNING ROUTE COST
$I_p = I_p + I_{c, before} + I_{c, after} - I_{c, p}(p)$

630 —

INSERT NEW PATHS IN LIST P
Insert.before $(p, p_{before}, P)$;
$I_{c,p}(p_{before}) = I_{c,before}$
Insert.after$(p, p_{after}, P)$; $I_{c, p}(p_{after})= I_{c,after}$

632 —

REMOVE PREVIOUS PATH p FROM LIST P
remove $(p, P);I_{c,p}(p) =$ **undefined**

REMOVE ATTRACTOR $a_{max}$ FROM LIST
$A = A \setminus \{ a_{max} \}$

— 634

592

**FIG. 8C**

a max

566

562

564

P max

560

FIG. 9A

568

a max

P before

P after

562

564

FIG. 9B

**FIG. 10**

**FIG. 11a**

**FIG. 11b**

**FIG. 11c**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003158658 A